# EUROPEAN PATENT APPLICATION

(11) **EP 4 650 027 A1**
(43) Date of publication of application: **19.11.2025**
(21) Application number: 25176771.1
(22) Date of filing: 15.05.2025
(51) Int. Cl.: B01D 35/30, B01D 29/11

(54) **FILTER ASSEMBLY FOR AN AIRCRAFT ENGINE**

(30) Priority: 15.05.2024 US 202418664857
(71) Applicant: PRATT & WHITNEY CANADA CORP., Longueuil, Québec J4G 1A1 (CA)
(72) Inventor: SAINTIGNAN, Cedric, (01BE5) Longueuil, J4G 1A1 (CA); MOKHTAR, Hytham, (01BE5) Longueuil, J4G 1A1 (CA); ETIENNE, Lakesha, (01BE5) Longueuil, J4G 1A1 (CA); DUKE, Brant, (01BE5) Longueuil, J4G 1A1 (CA)
(74) Representative: Dehns

(57) **Abstract**

A filter assembly (23, 33) for an aircraft engine (10) includes a filter housing (40) defining an inner cavity (41). The filter housing (40) has a fluid inlet (43) and a fluid outlet (44) for flowing a triboelectric fluid into and out of the inner cavity (41). A filter bowl (50) is removably attached to the filter housing (40) to seal the inner cavity (41). A filter (60) is disposed in the inner cavity (41), the filter (60) electrically coupled to the filter bowl (50) at a first electrical connection (70) and the filter (60) electrically coupled to the filter housing (40) at a second electrical connection (80) distinct from the first electrical connection (70) to thereby indirectly electrically couple the filter bowl (50) to the filter housing (40) via the filter (60). One or both of the first electrical connection (70) and the second electrical connection (80) provides a degree of freedom for the filter (60) to displace relative to the filter housing (40) or the filter bowl (50) upon engagement with the filter (60).

## Description

### TECHNICAL FIELD

The disclosure relates generally to aircraft engines, and, more particularly, to filter assemblies for aircraft engines.

### BACKGROUND

Aircraft engines include filter assemblies as part of fluid systems for working fluids such as oil and fuel. Typically, a filter assembly includes a filter housing that receives the filter and a filter bowl removably attached to the filter housing, thereby allowing the filter to be periodically inspected and replaced. The fluids to be filtered may be triboelectric fluids circulating at high velocities. In some cases, this can lead to charged particles accumulating on the inner walls of the filter housing and filter bowl. While solutions exist to electrically ground the various components of such a filter assembly, improvements are nonetheless desired.

### SUMMARY

In an aspect of the present invention, there is provided a filter assembly for an aircraft engine, comprising: a filter housing defining an inner cavity, the filter housing having a fluid inlet and a fluid outlet for flowing a triboelectric fluid into and out of the inner cavity; a filter bowl removably attached to the filter housing to seal the inner cavity; and a filter disposed in the inner cavity, the filter electrically coupled to the filter bowl at a first electrical connection and the filter electrically coupled to the filter housing at a second electrical connection distinct from the first electrical connection to thereby indirectly electrically couple the filter bowl to the filter housing via the filter, one or both of the first electrical connection and the second electrical connection providing a degree of freedom for the filter to displace relative to the filter housing or the filter bowl upon engagement with the filter.

In an embodiment of the above, one or both of the first electrical connection and the second electrical connection is operable to allow the filter to displace in a direction parallel to a direction of abutment between the filter and the first electrical connection or the second electrical connection.

In embodiments of any of the above, the filter assembly further includes a first set of seals disposed between the filter bowl and the filter housing, and a second set of seals disposed between the filter and the filter housing, wherein the first set of seals and the second set of seals are operable to compress upon attachment of the filter bowl to the filter housing.

In embodiments of any of the above, one of the first electrical connection and the second electrical connection includes a protrusion protruding from the filter bowl or the filter housing, the protrusion being operable to abut the filter.

In embodiments of any of the above, one or both of the first electrical connection and the second electrical connection includes a spring pin assembly having a spring operatively coupled to the filter bowl or the filter housing and a pin at a distal end of the spring, the pin being operable to abut the filter.

In embodiments of any of the above, one or both of the first electrical connection and the second electrical connection includes a spring strip assembly having a spring strip with a first end operatively coupled to the filter bowl or the filter housing and a second end operable to abut the filter.

In embodiments of any of the above, the filter bowl is removably attachable to the filter housing via a threaded connection.

In another aspect of the present invention, there is provided an aircraft engine, comprising: a fuel system including a fuel tank containing fuel for the aircraft engine and a fuel pump flow flowing the fuel to a combustor of the aircraft engine; an oil system including an oil tank containing oil for the aircraft engine and an oil pump for circulating the oil to components of the aircraft engine; and a filter assembly for the fuel system or the oil system, the filter assembly including a filter housing defining an inner cavity, the filter housing having a fluid inlet and a fluid outlet for flowing the fuel or the oil into and out of the inner cavity, a filter bowl removably attached to the filter housing to seal the inner cavity, and a filter disposed in the inner cavity for filtering the fuel or the oil, the filter electrically coupled to the filter bowl at a first electrical connection and the filter electrically coupled to the filter housing at a second electrical connection distinct from the first electrical connection to thereby indirectly electrically couple the filter bowl to the filter housing via the filter, one or both of the first electrical connection and the second electrical connection being compressible upon engagement with the filter.

In an embodiment of the above, one or both of the first electrical connection and the second electrical connection is operable to allow the filter to displace in a direction parallel to a direction of abutment between the filter and the first electrical connection or the second electrical connection.

In embodiments of any of the above, the aircraft engine further includes a first set of seals disposed between the filter bowl and the filter housing, and a second set of seals disposed between the filter and the filter housing, wherein the first set of seals and the second set of seals are operable to compress upon attachment of the filter bowl to the filter housing.

In embodiments of any of the above, one of the first electrical connection and the second electrical connection is a protrusion protruding from the filter bowl or the filter housing and operable to engage the filter.

In embodiments of any of the above, one or both of the first electrical connection and the second electrical connection is a spring pin assembly having a spring operatively coupled to the filter bowl or the filter housing and a pin at a distal end of the spring and operable to engage the filter.

In embodiments of any of the above, one or both of the first electrical connection and the second electrical connection is a spring strip assembly having a spring strip operatively coupled to the filter bowl or the filter housing at a first end operable to engage the filter at a second end.

In embodiments of any of the above, the filter bowl is removably attachable to the filter housing via a threaded connection.

In a further aspect of the present invention, there is provided a method for assembling a filter assembly in an aircraft engine, comprising: installing a filter in an inner cavity of a filter housing, said installing including establishing a first electrical connection between the filter and the filter housing; and securing a filter bowl to the filter housing to seal the inner cavity, said securing including establishing a second electrical connection between the filter and the filter bowl, the second electrical connection being distinct from the first electrical connection.

In an embodiment of the above, one or both of establishing the first electrical connection between the filter and the filter housing and establishing the second electrical connection between the filter and the filter bowl includes engaging the filter with one of the filter housing and the filter with a flexible electrical connection.

In embodiments of any of the above, engaging the filter with one of the filter housing and the filter with a flexible electrical connection includes engaging the filter with one of the filter housing and the filter via a spring strip assembly.

In embodiments of any of the above, engaging the filter with one of the filter housing and the filter with a flexible electrical connection includes engaging the filter with one of the filter housing and the filter via a spring pin assembly.

In embodiments of any of the above, establishing the first electrical connection between the filter and the filter housing or establishing the second electrical connection between the filter and the filter bowl includes engaging a protrusion protruding from the filter housing or the filter bowl with the filter.

In embodiments of any of the above, securing the filter bowl to the filter hosing includes engaging a threaded connection between the filter bowl and the filter housing.

It should be understood that any or all of the features, aspects or embodiments described herein can be used or combined in any combination with each and every other feature or embodiment described, unless expressly noted otherwise.

### BRIEF DESCRIPTION OF THE DRAWINGS

Reference is now made to the accompanying figures in which:
FIG. 1 is a schematic cross sectional view of a gas turbine engine;
FIG. 2 is a block diagram of an exemplary fuel system for the engine of FIG. 1;
FIG. 3 is a block diagram of an exemplary oil system for the engine of FIG. 1;
FIG. 4 is a schematic cross sectional view of a filter assembly for the engine of FIG. 1, in accordance with one or more embodiments of the present disclosure;
FIG. 5 is a schematic cross sectional view of a filter assembly for the engine of FIG. 1, in accordance with one or more embodiments of the present disclosure; and
FIG. 6 is a schematic cross sectional view of a filter assembly for the engine of FIG. 1, in accordance with one or more embodiments of the present disclosure.

### DETAILED DESCRIPTION

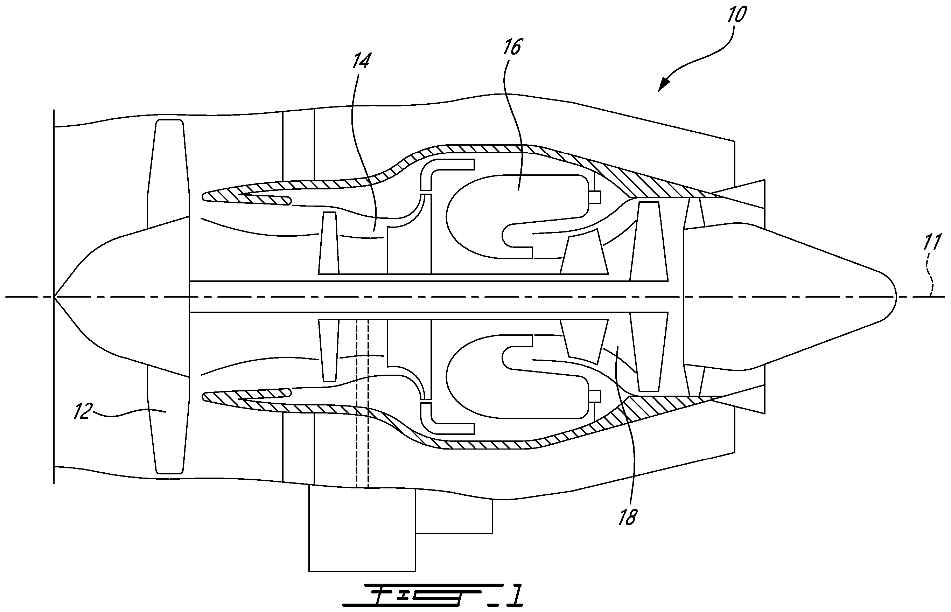

FIG. 1 illustrates a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. While FIG. 1 depicts the engine 10 as a turbofan engine, it is understood that the present disclosure is applicable to other aircraft engine types, such as a turboprop engine, a turboshaft engine, or a hybrid-electric engine.

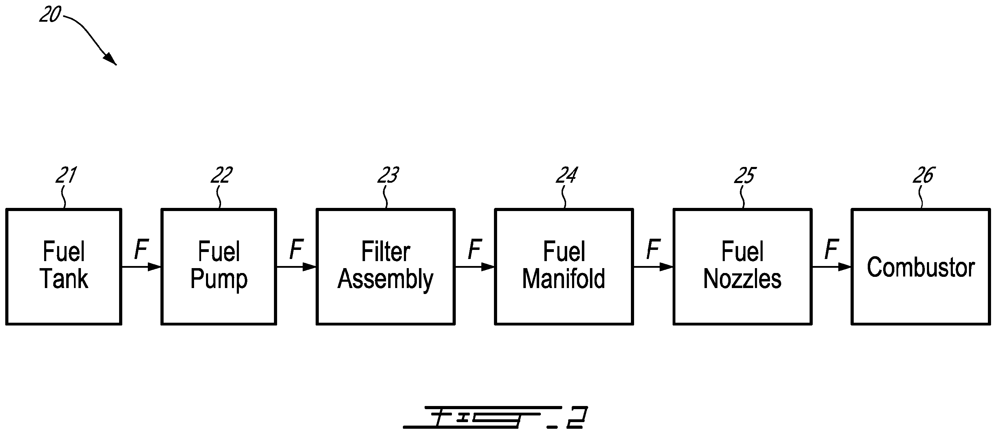

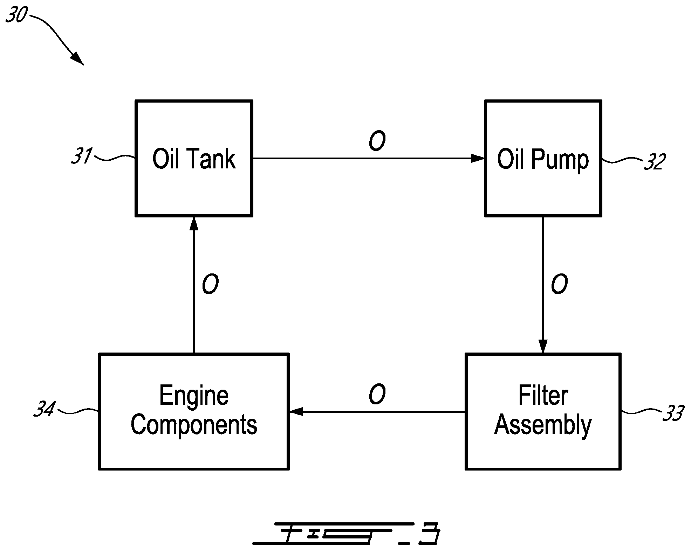

Referring to FIGS. 2 and 3, various working triboelectric fluids are used in the engine 10, such as fuel or oil. A triboelectric fluid is understood to be a fluid which can carry and transfer an electrical charge. An electrical charge may be transferred between objects when the contact or slide against each other that is caused, for example, and such electrical charges may be carried by the fluid through the corresponding fluid system of the engine 10. FIG. 2 depicts an exemplary fuel system 20 for the engine 10, while FIG. 3 depicts an exemplary oil system 30 for the engine 10. Other fluid systems which flow triboelectric fluids through the engine 10 may also be contemplated.

Referring to FIG. 2, an exemplary fuel system 20 for the engine 10 is shown in block diagram form, with arrows showing a flow direction of the fuel F through the fuel system 20. For simplicity, various components are omitted. The depicted fuel system 20 includes a fuel tank 21 for storing a fuel F for the engine 10, a fuel pump 22 for flowing the fuel F through the fuel system 20, a filter assembly 23 for filtering the fuel F, a fuel manifold 24 for distributing the fuel F, and one or more fuel nozzles 25 for injecting the fuel F into the combustor 16. It is understood that other components may be included in the fuel system, such as various valves, fuel meters, heat exchangers, and additional filters.

Referring to FIG. 3, an exemplary oil system 30 for the engine 10 is shown in block diagram form, with arrows showing a flow direction of the oil O through the oil system 30. For simplicity, various components are omitted. The depicted oil system includes an oil tank 31 for storing the oil O, an oil pump 32 for flowing the oil O through the oil system 30, a filter assembly 33 for filtering the oil O, and one or more engine components 34 receiving the oil O for lubrication thereof. Various components 34 may receive the oil O, such as bearings, pumps, and other rotating components. It is understood that other components may be included in the oil system 30, such as various valves, a sump for collecting the oil O and flowing it back to the oil tank 31, and additional filters and pumps.

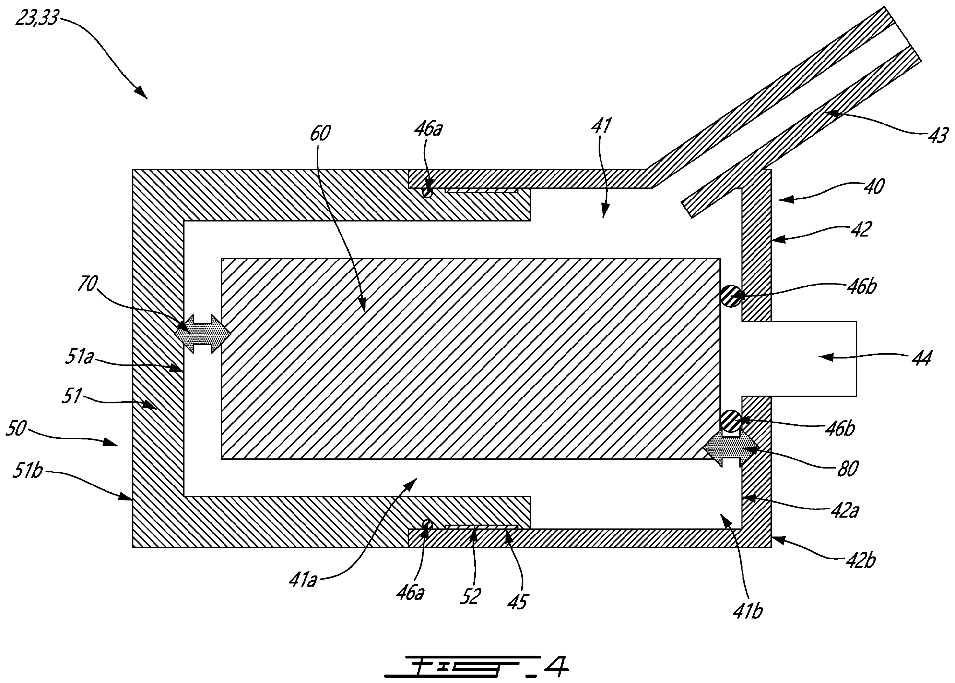

Referring now to FIG. 4, an exemplary filter assembly 23, 33 for the fuel system 20, oil system 30, or other fluid system of the engine 10 which includes a triboelectric fluid flowing therethrough. The depicted filter assembly 23, 33 includes generally a filter housing 40, a filter bowl 50 removably attached to the filter housing 40 to define an inner cavity 41, and a filter 60 disposed in the inner cavity 41. The shapes and sizes of the filter housing 40 and filter bowl 50 may vary, for instance based on the engine type and size, filter shape and size, fluid system, and the type of fluid to be flowed therethrough.

The depicted filter housing 40 includes a body 42 having an inner wall 42a and an outer wall 42b. The body 42 partially surrounds the inner cavity 41 in which the filter 60 is received, with an open end 41a to receive the filter 60 and to engage the filter bowl 50. The filter housing 40 includes an inlet 43 and an outlet 44 through the body 42 for flowing the fluid in and out of the inner cavity 41. The location and orientation of the inlet 43 and outlet 44 may vary. Illustratively, the outlet 44 is disposed at a closed end 41b of the body 42. The filter housing 40 includes an attachment 45 for engaging with and retaining the filter bowl 50. In the shown case, the attachment 45 includes inwardly-facing threading on the inner wall 42a for engaging with corresponding outwardly-facing threading in the filter bowl 50. While a threaded engagement or connection between the filter housing 40 and the filter bowl 50 is practical and provides adequate sealing, other attachments and sealing means may be contemplated, for instance a arrangement that includes mating flanges that are bolted together. A number of seals 46 are provided, for instance radial seals 46a at engagement locations between the filter housing 40 and filter bowl 50, and corner seals 46b between the filter housing 40 and the filter 60. The seals 46 may be made of a rubber type material so that they are compressible, as will be discussed in further detail below. Other materials for the seals 46 may be contemplated. The filter housing 40 may be made of a non-conductive material that may be susceptible to a static charge accumulation. For instance, the filter housing 40 may be made of aluminum or an aluminum alloy. Other materials may be contemplated.

The depicted filter bowl 50 includes a body 51 having an inner wall 51a and an outer wall 51b. The filter bowl 50 has an open end engageable with the filter housing 40 to seal the inner cavity 41 and the filter 60 received therewithin. The filter bowl 50 includes an attachment 52 for engaging with the filter housing 40. In the shown case, the attachment 52 includes external threading on the outer wall 51b for engaging with the corresponding internal threading in the inner wall 42a of the filter housing 40, as well as seals 46a that are compressible upon installation of the filter bowl 50 to the filter housing 40 fluidly seal the attachment 52. Other attachments may be contemplated, for instance a bolted arrangement. The filter bowl 50 may be made of a non-conductive material that may be susceptible to a static charge accumulation. For instance, the filter bowl 50 may be made of aluminum or an aluminum alloy with anodic conversion coating to prevent corrosion of the base metal. Other filter shapes and materials may be contemplated.

The filter 60 may be removably received in the filter housing 40. Various attachments for securing the filter 60 to the inner wall 42a of the filter housing 40 may be contemplated. The filter 60 may be removable, for instance for maintenance or replacement. The filter 60 is illustratively mounted to the closed end 41b of the body 42 of the filter housing 40, with seals 46b between the filter 60 and filter housing 40 straddling the outlet 44. In some cases, the seals 46b are compressible upon installation of the filter 60 in the inner cavity 41 to create the desired seal. As such, fluid may enter the inner cavity 41 via the inlet 43, pass through the filter 60, and then exit the inner cavity 41 via the outlet 44, with the seals 46b fluidly decoupling the pre and post filtered fluid. The filter 60 is at least partially made of conductive materials. In an embodiment, the filter is cylindrically-shaped with a metallic external structure (e.g., a coarse wire mesh) with an inner pleat filter media, as well as a metallic structure as its core. Other filter shapes and materials may be contemplated.

The filter 60 may be operable to filter a triboelectric fluid flowing through the engine 10 such as fuel F or oil O. As the triboelectric fluid flows through the inner cavity 41 at high velocities, it may carry charged particles that may cover the inner walls 42a, 51a of the filter housing 40 and filter bowl 50. It has been known to provide the attachment 45 between the filter housing 40 and filter bowl 50 with a conductive material (e.g., an anodized or Alodine coating at the threaded connection) to create a conductive path between the filter housing 40 and filter bowl 50, as well as to protect the parts against corrosion. As the filter housing 40 may be grounded, for instance via its attachment to other engine components, this connection between the filter housing 40 and the filter bowl 50 may contribute towards the prevention of static charge accumulation within the filter assembly 23, 33. However, this attachment 45 may be subject to frequent disassembly/reassembly (e.g., to replace the filter 60), and thus the mounting torque to perform such disassembly/reassembly. The friction created therefrom may cause the anodized or Alodine coating to wear off, thereby limiting the coating's effectiveness of corrosion protection.

In various embodiments of the present disclosure, an indirect electrical bonding path is provided between the filter housing 40 and the filter bowl 50. This indirect electrical bonding path may be by way of the filter 60. Stated differently, a first electrical bond 70 is provided between the filter bowl 50 and the filter 60, while a second electrical bond 80 is provided between the filter 60 and the filter housing 40. Static charges on the inner wall 51a of the filter bowl 50 may thus discharge, via the filter 60, to the grounded filter housing 40. While FIG. 4 depicts the electrical bonds 70, 80 schematically, various types of electrical bonds 70, 80 may be contemplated, as will be discussed in further detail below. In addition, in various embodiments, at least one of (i.e., one or both of) the electrical bonds 70, 80 is compressible upon engagement with the filter. The locations of each electrical bond 70, 80 may vary. In the embodiment shown in FIG. 4, each bond 70, 80 is disposed in the portion of the inner cavity 41 that contains the pre-filtered fluid, although other locations may be contemplated. In addition, as the attachment 45 may no longer be used as an electrical bonding path, a thicker coating of Alodine may be applied to extend the lifespan of the coating's effectiveness of corrosion protection.

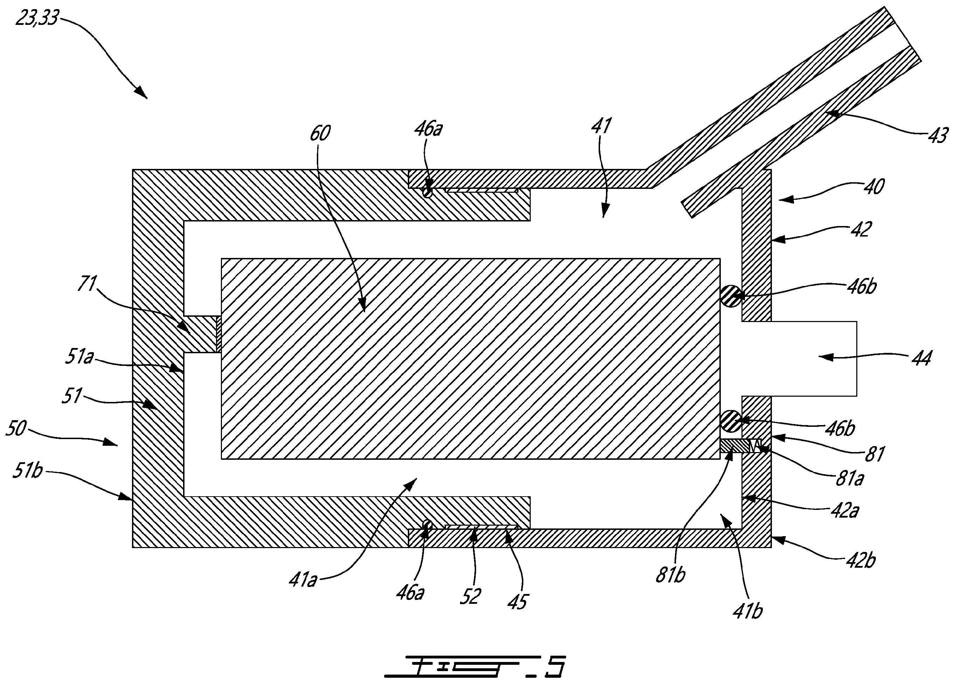

Referring to FIG. 5, in an embodiment, the first electrical bond 70 includes a boss or protrusion 71 extending or protruding from the inner wall 51a of the filter bowl 50 and abutting the filter 60. The shape of the boss 71 may vary. The boss 71 is dimensioned to abut the filter 60 when the filter bowl 50 is mounted to the filter housing 40 with sufficient pressure to ensure a consistent and uninterrupted electrical bond between the filter bowl 50 and the filter 60. In some cases, the boss 71 may be operable to allow the filter 60 to displace in a direction normal to the abutting direction between the boss 71 and the filter 60. The depicted boss 71 is not, however, compressible upon engagement with the filter 60. In some cases, the boss 71 may be integrally formed with the body 51 of the filter bowl 50. In other cases, the boss 71 may be a distinct component that is coupled to the body 51. In some cases, the boss 71 may be coated with Alodine, for instance where the filter bowl 50 is aluminum-based.

Still referring to FIG. 5, the depicted second electrical bond 80 includes a spring pin assembly 81, also referred to as a spring-loaded contact pin assembly, extending from the inner wall 42a of the filter housing 40 and abutting the filter 60. The depicted spring pin assembly 81 includes a spring 81a mounted to the inner wall 42a and a pin 81b mounted to a distal end of the spring 81a and operable to abut the filter 60. The spring 81a is operable to compress upon abutment between the pin 81b and the filter 60, for instance as the filter 60 is installed in the inner cavity 41 and/or as the filter bowl 50 is mounted to the filter housing 40. The spring 81a is thus operable to apply a spring force against the pin 81b to maintain abutment between the pin 81b and the filter 60 while being compressible in a direction parallel to the abutting direction between the pin 81b and the filter 60 when engaged with the filter 60. The range of motion of the filter 60 in this direction may thus be bound by the amplitude of the spring 81a. In some cases, the pin 81b may further allow the filter 60 to displace in a direction normal to the abutting direction between the pin 81b and the filter 60. The size and shape of the spring pin assembly 81 may vary.

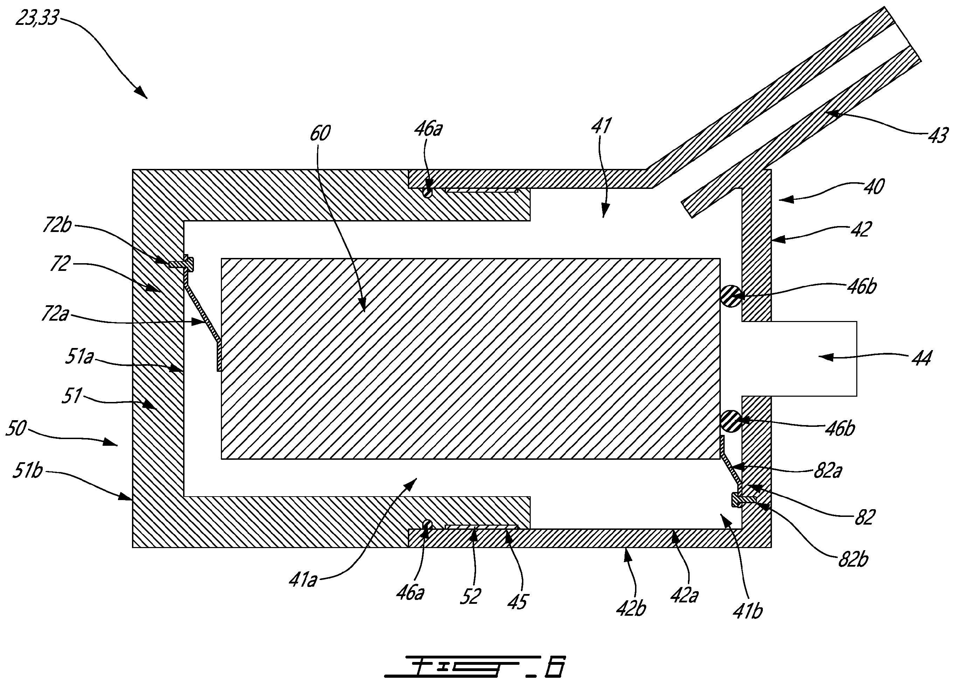

Referring now to FIG. 6, in another embodiment, both the first electrical bond 70 and the second electrical bond 80 include a spring strip assembly 72, 82. Each depicted spring strip assembly 72, 82 includes a spring strip 72a, 82a abutting the filter 60 at distal ends thereof and a fastener 72b, 82b, illustratively a screw, for mounting the spring strip 72a to the inner wall 51a of the filter bowl 50 and the spring strip 82a to the inner wall 42a of the filter housing 40 at proximal ends of the spring strips 72a, 82a. Other fasteners, for instance an adhesive, may be contemplated. Each spring strip 72a, 82a is flexible to allow for compression thereof upon engagement with the filter 60. The spring strips 72a, 82a are further operable to apply a force against the filter 60 to maintain the conductive path therebetween. In some cases, one or both spring strips 72a, 82a may further allow some displacement of the filter 60 in directions normal to the directions of abutment between the spring strips 72a, 82a and the filter 60.

Various combinations of the above-described electrical bonds may be contemplated. For instance, the first electrical bond 70 may include a spring pin assembly and the second electrical bond 80 may include a boss (i.e., the reverse arrangement of FIG. 5). Similarly, both the first and second electrical bonds 70, 80 may include spring pin assemblies. Combinations of a boss and a spring strip assembly on either of the first and second electrical bonds 70, 80, or of a spring pin assembly and a spring strip assembly on either of the first and second electrical bonds 70, 80 may also be contemplated. Other types of electrical bonds may be contemplated, for instance via a bonding strap. Preferably, at least one of the first and second electrical bond 70, 80 is compressible in a direction parallel to the abutting direction between the first and second electrical bond 70, 80 and the filter 60 when engaged with the filter 60. As such, upon installation of the filter bowl 50 to the filter housing 40, any potential compressive force against the filter 60 is instead absorbed by one or both of the first and second electrical bond 70, 80. This may limit any potential damage or performance deterioration to the filter 60. Similarly, this compressibility may further allow the filter 60 to displace to a certain degree (i.e., based on the amplitude of the spring 81a or spring strips 72a, 82a) in the abutment directions. This may further ensure the filter 60 is in constant electrical contact with the filter bowl 50 and filter housing 40.

In an exemplary embodiment, the present disclosure teaches a method for assembling a filter assembly 23, 33 in an aircraft engine 10. A filter 60 is installed in an inner cavity 41 of a filter housing 40, the installing including establishing a first electrical connection 70 between the filter 60 and the filter housing 40. A filter bowl 50 is secured to the filter housing 40 to seal the inner cavity 41, the securing including establishing a second electrical connection 80 between the filter 60 and the filter bowl 50, the second electrical connection 80 distinct from the first electrical connection 70.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various methods or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present. Additionally, the expression "at least one of" as used herein is understood to mean "one or both of", or alternately stated "and/or". In other words, the expression "at least one of X and Y" is understood to mean: just X; just Y; or both X and Y.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A filter assembly (23, 33) for an aircraft engine (10), comprising:
a filter housing (40) defining an inner cavity (41), the filter housing (40) having a fluid inlet (43) and a fluid outlet (44) for flowing a triboelectric fluid into and out of the inner cavity (41);
a filter bowl (50) removably attached to the filter housing (40) to seal the inner cavity (41); and
a filter (60) disposed in the inner cavity (41), the filter (60) electrically coupled to the filter bowl (50) at a first electrical connection (70) and the filter (60) electrically coupled to the filter housing (40) at a second electrical connection (80) distinct from the first electrical connection (70) to thereby indirectly electrically couple the filter bowl (50) to the filter housing (40) via the filter (60), one or both of the first electrical connection (70) and the second electrical connection (80) providing a degree of freedom for the filter (60) to displace relative to the filter housing (40) or the filter bowl (50) upon engagement with the filter (60).

2. The filter assembly (23, 33) as defined in claim 1, wherein one or both of the first electrical connection (70) and the second electrical connection (80) is operable to allow the filter (60) to displace in a direction parallel to a direction of abutment between the filter (60) and the first electrical connection (70) or the second electrical connection (80).

3. The filter assembly (23, 33) as defined in claim 1 or 2, further comprising a first set of seals (46, 46a, 46b) disposed between the filter bowl (50) and the filter housing (40), and a second set of seals (46, 46a, 46b) disposed between the filter (60) and the filter housing (40), wherein the first set of seals (46, 46a, 46b) and the second set of seals (46, 46a, 46b) are operable to compress upon attachment of the filter bowl (50) to the filter housing (40).

4. The filter assembly (23, 33) as defined in claim 1, 2 or 3, wherein one of the first electrical connection (70) and the second electrical connection (80) includes a protrusion (71) protruding from the filter bowl (50) or the filter housing (40), the protrusion (71) being operable to abut the filter (60).

5. The filter assembly (23, 33) as defined in any preceding claim, wherein one or both of the first electrical connection (70) and the second electrical connection (80) includes a spring pin assembly (81) having a spring (81a) operatively coupled to the filter bowl (50) or the filter housing (40) and a pin (81b) at a distal end of the spring (81a), the pin (81b) being operable to abut the filter (60).

6. The filter assembly (23, 33) as defined in any preceding claim, wherein one or both of the first electrical connection (70) and the second electrical connection (80) includes a spring strip assembly (72, 82) having a spring strip (72a, 82a) with a first end operatively coupled to the filter bowl (50) or the filter housing (40) and a second end operable to abut the filter (60).

7. An aircraft engine (10), comprising:
a fuel system (20) including a fuel tank (21) containing fuel for the aircraft engine (10) and a fuel pump (22) flow flowing the fuel to a combustor (16) of the aircraft engine (10);
an oil system (30) including an oil tank (31) containing oil for the aircraft engine (10) and an oil pump (32) for circulating the oil to components (34) of the aircraft engine (10); and
the filter assembly (23, 33) as defined in any of the preceding claims.

8. A method for assembling a filter assembly (23, 33) in an aircraft engine (10), comprising:
installing a filter (60) in an inner cavity (41) of a filter housing (40), said installing including establishing a first electrical connection (70) between the filter (60) and the filter housing (40); and
securing a filter bowl (50) to the filter housing (40) to seal the inner cavity (41), said securing including establishing a second electrical connection (80) between the filter (60) and the filter bowl (50), the second electrical connection (80) being distinct from the first electrical connection (70).

9. The method as defined in claim 8, wherein one or both of establishing the first electrical connection (70) between the filter (60) and the filter housing (40) and establishing the second electrical connection (80) between the filter (60) and the filter bowl (50) includes engaging the filter (60) with one of the filter housing (40) and the filter (60) with a flexible electrical connection.

10. The method as defined in claim 9, wherein engaging the filter (60) with one of the filter housing (40) and the filter (60) with a flexible electrical connection includes engaging the filter (60) with one of the filter housing (40) and the filter (60) via a spring strip assembly (72, 82).

11. The method as defined in claim 9 or 10, wherein engaging the filter (60) with one of the filter housing (40) and the filter (60) with a flexible electrical connection includes engaging the filter (60) with one of the filter housing (40) and the filter (60) via a spring pin assembly (81).

12. The method as defined in any of claims 8 to 11, wherein establishing the first electrical connection (70) between the filter (60) and the filter housing (40) or establishing the second electrical connection (80) between the filter (60) and the filter bowl (50) includes engaging a protrusion (71) protruding from the filter housing (40) or the filter bowl (50) with the filter (60).
